# EUROPÄISCHE PATENTSCHRIFT

(11) **EP 4 197 944 B1**
(45) Veröffentlichungstag und Bekanntmachung des Hinweises auf die Patenterteilung: **08.05.2024**
(21) Anmeldenummer: 21216035.2
(22) Anmeldetag: 20.12.2021
(51) Int. Cl.: B65G 47/82, B65D 88/54, B65G 65/42, B65G 65/44, B65G 65/46

(54) **ANLAGE ZUM EIN- UND AUSLAGERN VON SCHÜTTGUT UND VERFAHREN HIERFÜR**
INSTALLATION FOR STORING AND REMOVING BULK MATERIAL AND METHOD FOR SAME
INSTALLATION DE CHARGEMENT ET DE DÉCHARGEMENT DE MATIÈRE EN VRAC ET PROCÉDÉ ASSOCIÉ

(43) Veröffentlichungstag der Anmeldung: 21.06.2023
(60) Teilanmeldung: 23151246.8
(73) Patentinhaber: Zürcher Holding GmbH, 77974 Meißenheim (DE)
(72) Erfinder: Zürcher, Ralph, 77974 Meißenheim (DE); Vonhoff, Axel, 77974 Meißenheim (DE)
(74) Vertreter: mepat Patentanwälte

(56) Entgegenhaltungen:
- CN-A- 110 683 375
- CN-A- 112 551 189
- GB-A- 844 441
- JP-U- S5 781 202
- US-A- 3 891 099
- US-A1- 2013 216 340
- US-A1- 2019 256 305

## Beschreibung

Die Erfindung betrifft eine Anlage zum Ein- und Auslagern von Schüttgut in Schüttgutlagerboxen, und ein Verfahren, um den Ein- und Auslagervorgang in solchen Anlagen durchzuführen.

Aus dem Stand der Technik ist das Ein- und Ausstapeln von Schüttgut in langgestreckten Schüttguthalden bekannt. So beschreibt die EP 0 283 697 A1 eine Vorrichtung zum Ein- und Ausstapeln von Schüttgut in langgestreckten Schüttguthalden, wobei dort das auszustapelnde Schüttgut auf das Untertrum und das einzustapelnde Schüttgut auf das Obertrum eines in Längsrichtung der Halde verlaufenden Förderbandes zugeführt wird und zur Überführung des auszustapelnden Schüttgutes von der Ausstapel-Fördereinrichtung auf das Untertrum des Förderbandes ein kurzer Zwischenförderer vorgesehen ist.

Bei den bekannten Schüttguthalden, die je nach Ausgestaltung auch als Schüttgutlagerboxen bezeichnet werden und dann entsprechend mit Rückwand und Seitenwänden und gegebenenfalls mit Bodenplatte ausgestaltet werden, ist stets von Relevanz, wie das Schüttgut unter idealer Raumausnutzung eingestapelt oder eingelagert werden kann, und wie es geschickt und mit geringem Aufwand - sowohl zeitlich als auch Apparativ und in Bezug auf Wartungs- und Verwaltungsaufwand - bewirtschaftet werden kann.

Aus GB 844 441 A ist eine Anlage gemäß dem Oberbegriff des Anspruchs 1, zum Ein- und Auslagern von Schüttgut in einer Schüttgutlagerbox bekannt, die zwei Seitenwände und eine offene Seite zum Ein- und Auslagern von Schüttgut aufweist. Eine gegenüber der offenen Seite angeordnete Rückwand und die Seitenwände sind auf einer Bodenplatte angeordnet, wobei an einer Kante zwischen der Bodenplatte und der Rückwand zumindest eine Auslassöffnung für Schüttgut angeordnet ist, unterhalb der eine Auslagereinrichtung vorliegt. Mit einer Schwenkarmvorrichtung wird Schüttgut in der Schüttgutlagerbox zu der Auslassöffnung bewegt. Ausgehend von diesem Stand der Technik liegt der Erfindung die Aufgabe zugrunde, eine Anlage zum Ein- und Auslagern von Schüttgut bereitzustellen, die einen verbesserten Wartungs- und Verwaltungsaufwand bereitstellt.

Diese Aufgabe wird durch eine Anlage zum Ein- und Auslagern von Schüttgut mit den Merkmalen des Anspruchs 1 gelöst.

Die weitere Aufgabe, die Handhabung des Schüttgutes in einer Anlage zum Ein- und Auslagern von Schüttgut zu verbessern, wird durch das Verfahren mit den Merkmalen des unabhängigen Anspruchs 14 gelöst.

Weiterbildungen der Vorrichtungen und der Verfahren sind in den jeweiligen Unteransprüchen ausgeführt.

Gemäß einer ersten Ausführungsform der erfindungsgemäßen Anlage zum Ein- und Auslagern von Schüttgut umfasst diese wenigstens eine Schüttgutlagerbox. Eine solche Schüttgutlagerbox hat zwei Seitenwände und eine offene Seite zum Ein- und Auslagern von Schüttgut, der gegenüber eine Rückwand angeordnet ist. Seitenwände und Rückwand sind auf einer Bodenplatte angeordnet. Dabei ist an einer zwischen der Bodenplatte und der Rückwand vorliegenden Kante zumindest eine Auslassöffnung für Schüttgut angeordnet, unterhalb der eine Auslagereinrichtung vorliegt. Die Anlage verfügt über zumindest eine Vorrichtung zum Bewegen von Schüttgut, die vorteilhaft das Schüttgut auch zu der Auslassöffnung befördert und damit abfördert. Innerhalb der Schüttgutlagerbox kann diese Vorrichtung das Einlagern des Schüttguts unterstützen, etwa durch bewegen des Schüttguts an geeignete Positionen. Die Anlage verfügt ferner über zumindest eine Erfassungsvorrichtung, die zum Erfassen einer Menge an Schüttgut in der Schüttgutlagerbox ausgebildet ist, und weist eine Steuerungsvorrichtung auf, die mit zumindest einer Erfassungsvorrichtung und der Vorrichtung zum Bewegen von Schüttgut gekoppelt ist. Vorteilhaft ist die Vorrichtung zum Bewegen von Schüttgut dadurch steuerbar. Erfindungsgemäß weist die erfindungsgemäße Vorrichtung zum Bewegen von Schüttgut eine Schieberanlage auf, die an der offenen Seite der Schüttgutlagerbox angeordnet ist und die einen Rahmen aufweist, an dem ein Schieber angeordnet ist, der mittels einer Verfahrvorrichtung - bevorzugt einer teleskopierbaren Verfahrvorrichtung - von der offenen Seite der Schüttgutlagerbox zumindest auf eine Länge bis zu der zumindest einen Auslassöffnung verfahrbar, bevorzugt teleskopierbar, ist und der eine Breite aufweist, die zumindest einem Teil oder der ganzen Breite der Rückwand entspricht.

"Auslagereinrichtung" meint hierin jede geeignete Vorrichtung zum Auslagern bzw. Abtransport von Schüttgut.

Die Anlage kann durchaus aber zwei, drei oder noch mehr Schüttgutlagerboxen aufweisen, die vorteilhaft benachbart zueinander angeordnet sind. Dann können die Schüttgutlagerboxen auch Seitenwände teilen und können eine gemeinsame Rückwand aufweisen. Die Bodenplatte hierin sieht vor, dass unterhalb derselben noch Raum für eine oder mehrere Auslagereinrichtungen vorliegt.

Dies meint hierin, dass das Schüttgut, das ja nicht wieder durch die Zuförderrichtung, von der gegenüber der Rückwand liegenden offenen Seite in das Innere der Schüttgutlagerbox liegt, abgefördert oder ausgelagert wird, in diesem Fall in eine Ebene unter der Bodenplatte geschafft wird, indem es durch eine oder mehrere Auslassöffnungen fällt, und von wo es abgefördert wird. Dies kann bspw. mit einem Förderband geschehen.

Indem nach einer weiteren Ausführungsform die in der Schüttgutlagerbox angeordnete Erfassungsvorrichtung - es können mehrere sein, und bei mehreren Schüttgutlagerboxen sind jeder der Schüttgutlagerboxen eine oder mehrere Erfassungsvorrichtungen zugeordnet - dazu ausgebildet ist, eine Selbststeuerung und -regelung der Steuerungsvorrichtung der Vorrichtung zum Bewegen von Schüttgut, basierend auf dem Erfassen der Menge an Schüttgut in der Schüttgutlagerbox durch die dort angeordnete Erfassungsvorrichtung(en) zu bewirken und Schüttgut in der einen oder mehreren Schüttgutlagerboxen also automatisch zu bewegen, ist der Verwaltungsaufwand vorteilhaft gering.

Natürlich können die Erfassungsvorrichtungen außer zur Steuerung von Vorrichtungen zum Bewegen von Schüttgut auch der optischen Kontrolle an sich dienen.

Nicht ganz automatisch, aber quasi halbautomatisch kann bzw. können nach einer noch weiteren Ausführungsform die in der Schüttgutlagerbox angeordneten Erfassungsvorrichtung(en) mit zumindest einer Datenverarbeitungsvorrichtung eines Bedieners kommunizieren, die mit der Steuerungsvorrichtung der Vorrichtung zum Bewegen von Schüttgut zur indirekten Steuerung gekoppelt ist.

Nach einer noch weiteren Ausführungsform der erfindungsgemäßen Anlage können die Erfassungsvorrichtungen, die zum Erfassen einer Menge an Schüttgut in der Schüttgutlagerbox ausgebildet sind, eine oder mehrere Kamera(s) und/oder Sensoren umfassen. Diese sind vorteilhaft an einer oder beiden der Seitenwände und zusätzlich oder alternativ an der Rückwand angeordnet, oder, ebenfalls zusätzlich oder alternativ, an einer Haltevorrichtung an der offenen Seite der Schüttgutlagerbox befestigt. Diese Kamera(s) und/oder Sensoren ist/sind auf das auf der Bodenplatte eingelagerte Schüttgut gerichtet und erfassen den Ort, an den Schüttgut abgelagert wurde, aber auch die Menge, indem bspw. das Schüttgutvolumen per optischen Sensoren oder auch durch die Bildgebung einer oder mehrerer Kameras erfasst wird. Ferner kann zur Erfassung von Ort und Menge oder Gewicht auch vorgesehen sein, Wägevorrichtungen, bspw. Wägesensoren, an oder in der Bodenplatte anzuordnen.

Ergänzend können die Erfassungsvorrichtungen vorteilhaft Sensoren zur Abstandsmessung (Ultraschall) in einem oberen Bereich der Seitenwände sein. Dies können die Kameras sinnvoll ergänzen oder sogar ersetzen, weil durch das Schüttguteinlagern mit starken Staubemissionen zu rechnen ist.

Nach einer noch weiteren Ausführungsform der erfindungsgemäßen Anlage kann oder können die Auslassöffnung(en) die an der Kante vorliegt bzw. vorliegen, die durch die Rückwand und die Bodenplatte gebildet wird, eine oder mehrere Durchtrittsöffnungen sein. Diese Auslassöffnung(en) kann/können einen polygonalen, bevorzugt einen rechteckigen aber auch einen halbrunden Querschnitt aufweisen. Sie können wie Löcher, Langlöcher oder auch Schlitze ausgebildet sein und erlauben, dass das Schüttgut in die unter der Bodenplatte befindliche Ebene befördert wird.

Der Schieber der Schieberanlage der erfindungsgemäßen Vorrichtung zum Bewegen von Schüttgut ist bevorzugt von einer teleskopierbaren Verfahrvorrichtung von der offenen Seite der Schüttgutlagerbox zumindest auf eine Länge bis zu der zumindest einen Auslassöffnung teleskopierbar verfahrbar.

Grundsätzlich könnte die erfindungsgemäße Anlage aber ohne die erfindungsgemäße Vorrichtung zum Bewegen von Schüttgut betrieben werden und stattdessen konventionell beschickt und verwaltet werden, etwa per Radlader oder mit einer sonstigen Vorrichtung. Diese Vorrichtungen können aber mit der erfindungsgemäßen Erfassungsvorrichtung mit Daten versorgt und voll- oder teilautomatisch gesteuert werden, sie können autonom gefahren werden, oder ein Bediener, der zugleich Fahrer sein kann, erhält die durch die Erfassungsvorrichtung erfassten Messwerte und Daten über entsprechende Datenübertragungseinheiten, die bei den Erfassungsvorrichtungen vorliegen und die mit den Datenerfassungseinheiten, die bedienerseitig oder bei den Vorrichtungen, die das Schüttgut autonom bewegen, vorliegen.

Wenn die erfindungsgemäße Anlage eine erfindungsgemäße Vorrichtung zum Bewegen von Schüttgut aufweist, so kann diese nach noch einer weiteren Ausführungsform die Schieberanlage mit einer Hebevorrichtung aufweisen, die mit dem Rahmen gekoppelt ist und dazu ausgebildet ist, die teleskopierbare Verfahrvorrichtung mit dem Schieber entlang der Höhe des Rahmen zu verfahren. Dabei kann die Verfahrvorrichtung entweder nur ein Stück weit oder auch bis zum oberen Rand des Rahmens verfahren werden. So kann vorteilhaft der Schieber jeweils bis zur Höhe der Oberkante des eingelagerten Schüttguts angehoben werden und dieses bewegen.

Üblicherweise wird das Schüttgut, wenn es eingelagert wird, Häufen bilden. Je nachdem, durch welche Vorrichtung das Schüttgut eingelagert wird - bspw. von oben durch Befülltrichter, von oben oder von der Frontseite (offene Seite, die hierin als vordere Seite verstanden wird), durch ein oder mehrere Förderbänder, oder auch durch Radlader oder sonstige Fördervorrichtungen, wird das Versetzen des Schüttguts und auch dessen Überführung zu der Auslassöffnung zwecks Auslagerung notwendig.

Es ist daher vorteilhaft, wenn nach einer noch weiteren Ausführungsform der Erfindung eine Schiebevorrichtung an oder vor der Bodenplatte an der offenen Seite der Schüttgutlagerbox angeordnet ist, an oder mittels der der Rahmen, an dem der Schieber angeordnet ist, in Bezug zu der Breite der offenen Seite der zumindest einen Schüttgutlagerbox quer verschiebbar ist.

Der Rahmen kann nach einer noch weiteren Ausführungsform der Erfindung zumindest zwei vertikale Stützelemente aufweisen, die an einem oberen, bodenfernen Ende durch zumindest ein horizontales Stabilisierungselement miteinander verbunden sind, und an einem unteren, bodennahen Ende zumindest eine Verfahrvorrichtung aufweisen.

Nach einer bevorzugten Ausgestaltung können die vertikalen Stützelemente - es kann an jeder vertikalen Rahmenseite eines vorliegen, es können aber auch, je nach Stabilitätserfordernis an den Rahmen mehrere sein - Traversenelemente oder Plattenelemente sein.

Die Verfahrvorrichtung kann Räder oder Rollen aufweisen, um den Rahmen verschiebbar bzw. verfahrbar auszuführen. Generell weiß der Fachmann außer den Rädern oder Rollen auch Äquivalente mittel hier einzusetzen, bspw. Kufen.

Der Begriff "bodennah" meint hierin das zu dem Boden, auf dem auch die Bodenplatte anliegt, weisende Ende des Rahmens, wohingegen "bodenfern" das davon abgewandte und folglich obere Ende des Rahmens meint.

Nach einer noch weiteren Ausführungsform kann die Anlage eine Schienenvorrichtung zum Verschieben und als Gegenlager für den Rahmen aufweisen. Dieses Gegenlager, das auch das Verschieben des Rahmens zulässt, kann oberenends an den zwei Seitenwänden der Schüttgutlagerbox, vorliegen. Es ist bevorzugt ein Querholm, der erlaubt, dass entlang seiner Länge der obere, bodenferne Abschnitt des Rahmens verschiebbar ist.

Wenn mehrere Schüttgutlagerboxen nebeneinander vorliegen, kann sich diese Schienenvorrichtung über die gesamte Breite der Vorderseiten der Schüttgutlagerboxen erstrecken.

Der teleskopierbare Schieber kann eine Mehrzahl ineinander verfahrbarer und teleskopierbarer Schiebeelemente aufweisen, die über eine Vorrichtung zum Halten und Betätigen an dem horizontalen Stabilisierungselement des Rahmens angeordnet sind.

Ein erstes der Schiebeelemente kann an einer Befestigungsvorrichtung, die unten im Rahmen angeordnet sein kann, befestigt sein, während das letzte der Schiebeelemente den Schieber haltert.

Die teleskopierbaren Schiebeelemente können flache Rahmen- oder Plattenelemente, aber auch Hubzylinder oder Elektrozylinder sein, die auch elektromotorisch betrieben werden können.

Die Vorrichtung zum Halten und Betätigen der Schiebeelemente kann hydraulisch (Hydraulikelemente), pneumatisch, per Zahnradantrieb oder per Seilzug betätigt werden.

Die Befestigungsvorrichtung ist nach einer noch weiteren Ausführungsform der erfindungsgemäßen Anlage zwischen den zumindest zwei vertikalen Stützelementen des Rahmens positioniert und weißt zwei Schenkel auf, die jeweils einen Haltefuß haben, an dem ein Schwenkarm befestigt ist, der schwenkbar seitlich mit den teleskopierbaren Schiebeelementen, bevorzugt mit einer der beiden Längskanten des ersten Rahmen- oder Plattenelements verbunden ist. Dabei kommt in einem eingefahrenen Zustand der teleskopierbaren Schiebeelemente die Mehrzahl der Rahmen- oder Plattenelemente an oder in dem ersten der Rahmen- oder Plattenelement zur Anlage. In einem eingefahrenen Nichtbenutzungszustand der teleskopierbaren Schiebeelemente, wenn also kein Schüttgut bewegt wird, werden diese von einer Position innerhalb der Schüttgutlagerbox nach außerhalb der Schüttgutlagerbox verschwenkt, indem die Rahmen- oder Plattenelemente, Hub- oder Elektrozylinder durch den Schwenkarm unter dem horizontalen Stabilisierungselement des Rahmens aus der Schüttgutlagerbox herausgeschwenkt werden und der Schieber in die Schüttgutlagerbox hinein weisend angeordnet bleibt.

Die Befestigungsvorrichtung kann auch die Hebevorrichtung bereitstellen.

Nach einer noch weiteren Ausführungsform der erfindungsgemäßen Anlage weist die Schiebevorrichtung zumindest zwei Schienen auf, die entlang der Breite der zumindest einen oder entlang der mehreren Schüttgutlagerboxen angeordnet sind, und an denen der Rahmen, an dem der Schieber angeordnet ist, verschiebbar ist, und wobei bevorzugt zwischen den zumindest zwei Schienen entlang deren Länge zumindest ein entlang der Schienen verschiebbar befestigtes Profilelement angeordnet ist, das Ausnehmungen aufweist, mit denen die Haltefüße der Befestigungsvorrichtung in Eingriff stehen.

Nach einer ersten erfindungsgemäßen Ausführungsform eines Verfahrens zum Ein- und Auslagern von Schüttgut in einer erfindungsgemäßen Anlage mit erfindungsgemäßer an der Steuerung einer Vorrichtung zum Bewegen von Schüttgut beteiligter Erfassungsvorrichtung umfasst dieses die Schritte
- Bereitstellen der Schüttgutlagerbox, die zwei Seitenwände und eine offene Seite zum Ein- und Auslagern von Schüttgut aufweist, der gegenüber die Rückwand angeordnet ist, wobei die Seitenwände und die Rückwand auf der Bodenplatte angeordnet sind, und wobei an der zwischen der Bodenplatte und der Rückwand vorliegenden Kante zumindest eine Auslassöffnung für Schüttgut angeordnet ist, unterhalb der eine Auslagereinrichtung für Schüttgut vorliegt, und Bereitstellen der Vorrichtung zum Bewegen von Schüttgut,
- in Gang setzen der Erfassungsvorrichtung, die zum Erfassen einer Menge an Schüttgut in der Schüttgutlagerbox ausgebildet ist,
- Übertragen der Daten der erfassten Menge an Schüttgut in der Schüttgutlagerbox an die Steuerungsvorrichtung, die mit der Erfassungsvorrichtung und der Vorrichtung zum Bewegen von Schüttgut gekoppelt ist, und
- Steuern der Vorrichtung zum Bewegen von Schüttgut in Abhängigkeit der Daten der erfassten Menge an Schüttgut, hierdurch Ein- und Auslagern von Schüttgut.

Die Daten, die mittels der Erfassungsvorrichtung erhalten worden sind, können vorteilhaft durch die Steuerung der Vorrichtung zum Bewegen von Schüttgut eine Teil- oder Komplettentleerung einer Schüttgutlagerbox veranlassen. Es kann ein Entleerungsmodus der Schüttgutlagerbox ausgeführt werden, der basierend auf einer Folge von erfassten Daten erstellt werden kann und der auch in der Steuerungsvorrichtung hinterlegt werden. Hierfür kann der Schieber der Vorrichtung zum Bewegen von Schüttgut entlang vorbestimmter Steuerkurven bewegt werden. Diese Steuerkurven können in der Steuerungsvorrichtung hinterlegt sein oder auf Basis der durch die Erfassungsvorrichtung bereitgestellten Daten generiert werden. Nach einer weiteren erfindungsgemäßen Ausführungsform des Verfahrens umfasst dieses die Schritte des Bewegens des Schüttguts in der einen oder mehreren Schüttgutlagerboxen durch das in Gang setzen der Erfassungsvorrichtung, die zum Erfassen einer Menge an Schüttgut in der Schüttgutlagerbox ausgebildet ist, und das Übertragen der Daten der erfassten Menge an Schüttgut in der Schüttgutlagerbox an die Steuerungsvorrichtung, die mit der Erfassungsvorrichtung und der Vorrichtung zum Bewegen von Schüttgut gekoppelt ist, und das Steuern der Vorrichtung zum Bewegen von Schüttgut durch eine Selbststeuerung und -regelung der Steuerungsvorrichtung der Vorrichtung zum Bewegen von Schüttgut, wodurch quasi vorteilhaft automatisiertes Bewegen gegeben ist, basierend auf dem Erfassen der Menge an Schüttgut in der Schüttgutlagerbox durch die dort angeordnete Erfassungsvorrichtung(en). Vorteilhaft wird hiermit somit die Steuerung der Vorrichtung zum Bewegen von Schüttgut direkt durch die Erfassungsvorrichtung bewirkt.

Nach noch einer weiteren, alternativen erfindungsgemäßen Ausführungsform des Verfahrens umfasst dieses die Schritte des Bewegens des Schüttguts in der einen oder mehreren Schüttgutlagerboxen durch das in Gang setzen der Erfassungsvorrichtung, die zum Erfassen einer Menge an Schüttgut in der Schüttgutlagerbox ausgebildet ist, und das Übertragen der Daten der erfassten Menge an Schüttgut in der Schüttgutlagerbox an die Steuerungsvorrichtung, die mit der Erfassungsvorrichtung und der Vorrichtung zum Bewegen von Schüttgut gekoppelt ist. Das Steuern der Vorrichtung zum Bewegen von Schüttgut erfolgt, indem die durch die in der zumindest einen Schüttgutlagerbox angeordnete oder angeordneten Erfassungsvorrichtung(en) mit zumindest einer Datenverarbeitungsvorrichtung eines Bedieners kommunizieren, die mit der Steuerungsvorrichtung der Vorrichtung zum Bewegen von Schüttgut zur indirekten Steuerung gekoppelt ist.

Weitere Ausführungsformen der Vorrichtungen und Verfahren sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine perspektivische Ansicht der erfindungsgemäßen Anlage zum Ein- und Auslagern von Schüttgut mit eingelagertem Schüttgut,
- **Fig. 2**: eine perspektivische Ansicht einer ersten Ausführungsform der erfindungsgemäßen Anlage ohne eingelagertes Schüttgut,
- **Fig. 3**: eine weitere perspektivische Ansicht der ersten Ausführungsform der erfindungsgemäßen Anlage mit ausgefahrener Schiebervorrichtung,
- **Fig. 4**: eine Detailansicht der ausgefahrenen Schiebervorrichtung gemäß Fig. 3,
- **Fig. 5**: eine perspektivische Ansicht einer weiteren Ausführungsform der erfindungsgemäßen Anlage ohne eingelagertes Schüttgut,
- **Fig. 6**: eine perspektivische Ansicht noch einer weiteren Ausführungsform der erfindungsgemäßen Anlage ohne eingelagertes Schüttgut.

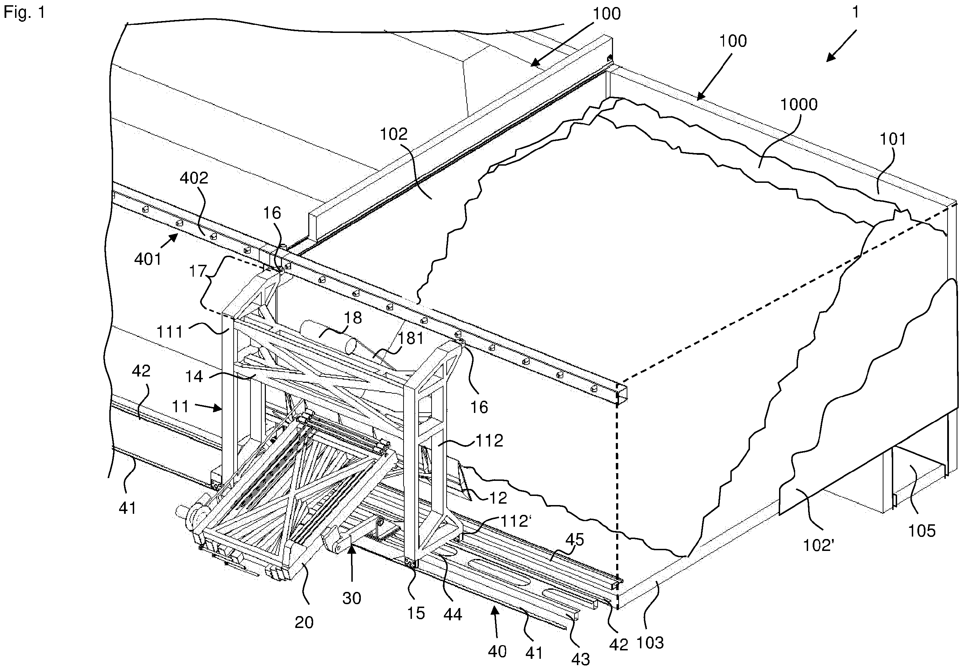

Eine in **Fig. 1** gezeigte Anlage 1 zum Ein- und Auslagern von Schüttgut 1000 weist zwei Schüttgutlagerboxen 100 auf, wobei die **Fig. 1 bis 6** jeweils eine solche Schüttgutlagerbox 100 im Detail darstellen. Jede Schüttgutlagerbox 100 wird durch zwei Seitenwände 102, 102' und eine Rückwand 101 gebildet. Zwischen den Seitenwänden 102, 102' liegt eine Bodenplatte 103 vor, auf der das Schüttgut 1000 in **Fig. 1** gelagert ist.

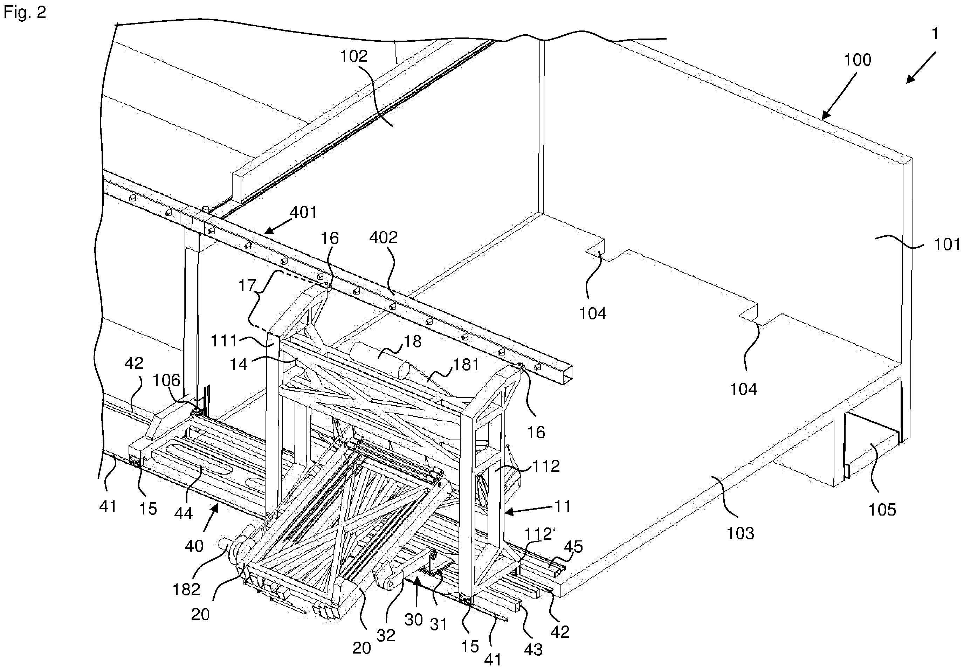

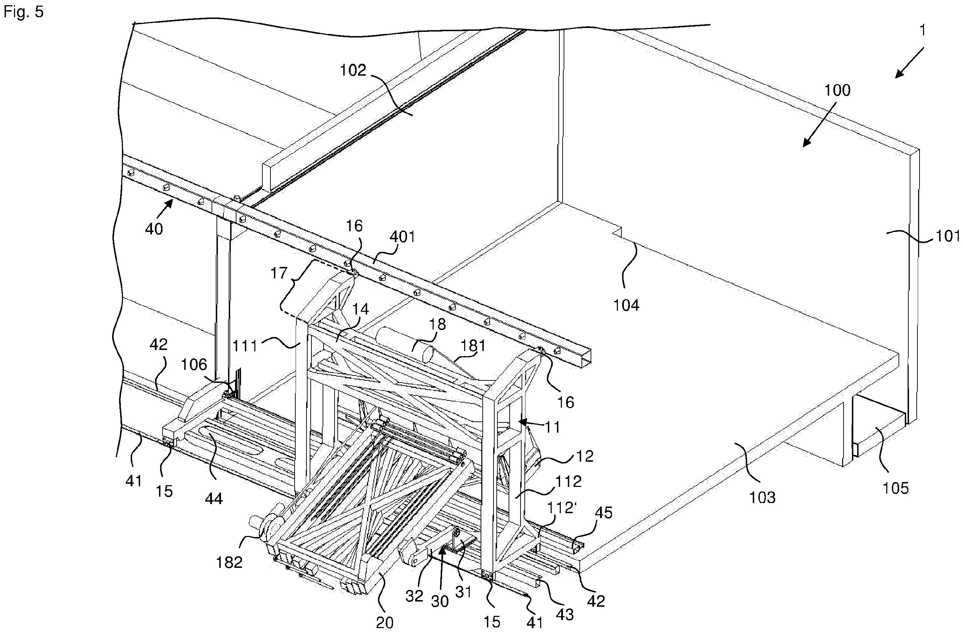

Wie in **Fig. 2 bis 6** dargestellt, sind in der Bodenplatte 103 Auslassöffnungen 104 vorgesehen, durch die Schüttgut 1000 ausgetragen werden kann. Die Auslassöffnungen 104 liegen an der Kante vor, die durch die Rückwand 101 und die Bodenplatte 103 gebildet wird, und können unterschiedlich geformt sein: **Fig. 2** zeigt zwei quadratische Auslassöffnungen 104 in der Bodenplatte 103, in **Fig. 5** ist in die Bodenplatte 103 eine schlitzförmige Auslassöffnung 104 eingebracht, die sich von der einen Seitenwand der Schüttgutlagerbox bis kurz vor die Seitenwand 102 erstreckt.

Unterhalb der Bodenplatte 103 und der Auslassöffnungen 104 ist eine Auslagereinrichtung 105 angeordnet, auf die Schüttgut zum Auslagern bzw. Abfördern durch die Auslassöffnungen 104 fallen kann. Gegenüber der Rückwand 101 liegt eine offene Seite vor, an der eine Vorrichtung zum Bewegen von Schüttgut 1000 angeordnet ist, mit deren Hilfe das Schüttgut 1000 auf der Bodenplatte 103 arrangiert oder auch in die Auslassöffnungen geschoben werden kann. Alternativ (figurativ nicht gezeigt) könnte ein durchgängiger Schlitz in der Bodenplatte vorgesehen sein. Dann kann der Schieber alternativ auch über die ganze Breite ausgeführt werden. Der Schlitz könnte bspw. mit dünnen Stegen ausgeführt sein, um das seitliche Verschieben des Schüttguts über den Öffnungen unnötig zu machen.

Die Vorrichtung zum Bewegen von Schüttgut 1000 hat ferner eine Schieberanlage, die eine Breite aufweist, die einem Teil der Breite der Rückwand 101 entspricht. Die Schieberanlage umfasst einen Rahmen 11, an dem die Komponenten der Schieberanlage befestigt sind und der entlang der offenen Seite der Schüttgutlagerbox 100 verfahren werden kann.

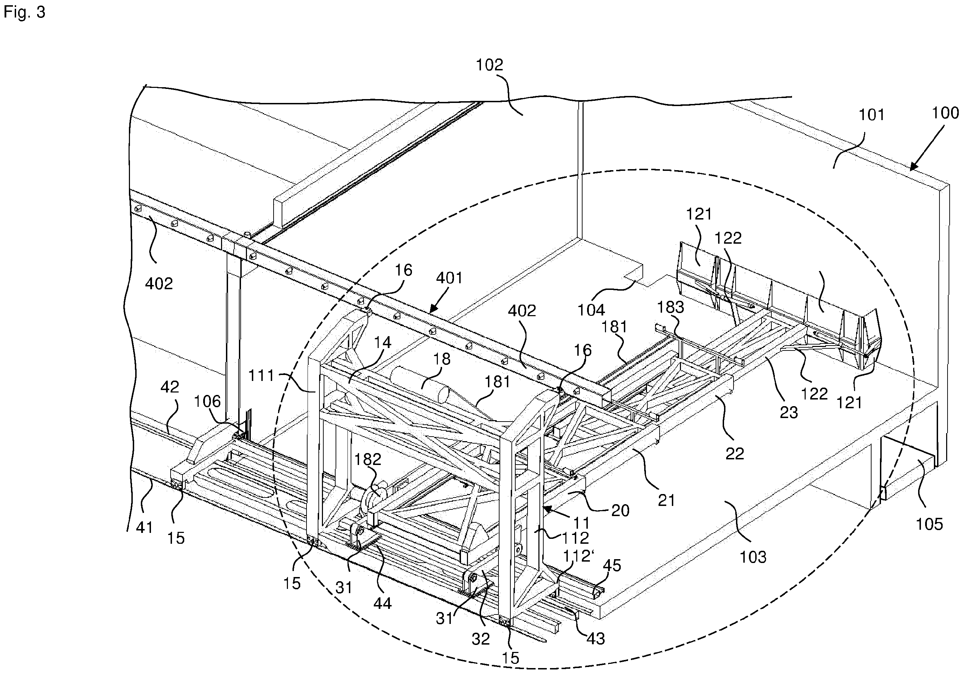

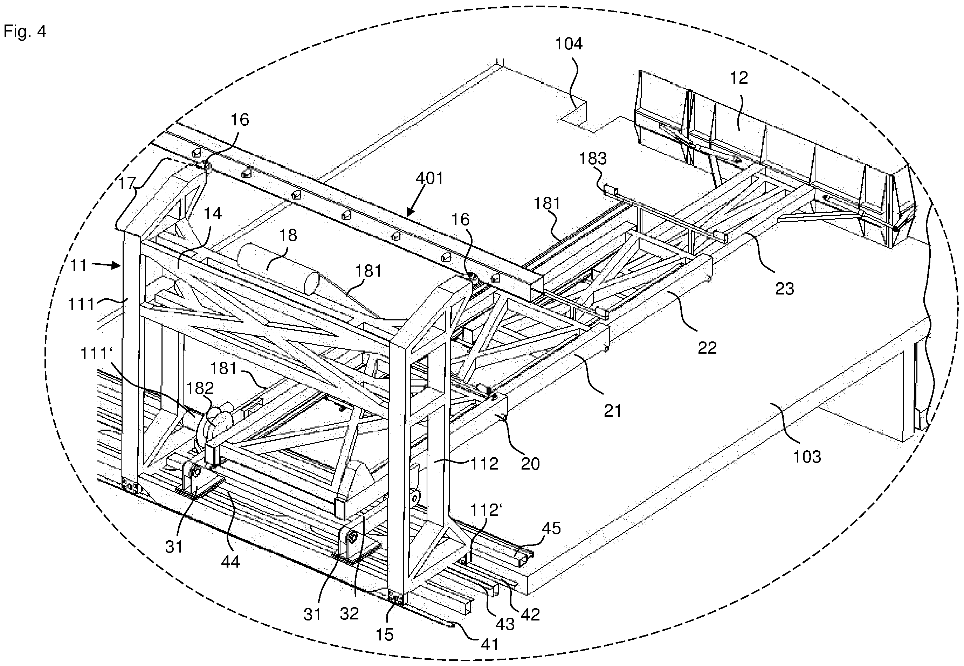

Der Rahmen 11 weist zwei vertikale Traversenelemente 111, 112 als seitliche Stützelemente auf. Die Traversenelemente 111, 112 sind an einem oberen, bodenfernen Ende durch ein horizontales Stabilisierungselement 14 miteinander verbunden. Auch dieses Stabilisierungselement 14 ist, wie insbesondere **Fig. 3** **und** **4** zeigen, ein Traversenelement. An ihrem unteren, bodennahen Ende sind Rollen 15 vorgesehen, die eine Verfahrvorrichtung für den Rahmen 11 bilden.

An dem Rahmen ist ein teleskopierbar ausfahrbarer Schieber 12 angeordnet, der in **Fig. 1 bis 6** vier ineinander verfahrbare und teleskopierbare Rahmenelemente 20 bis 23 aufweist.

Der Rahmen 11 haltert an dem horizontalen Stabilisierungselement 14 des Rahmens eine Vorrichtung 18 zum Halten und Betätigen des teleskopierbaren Schiebers 12. In einem unteren Abschnitt des Rahmens 11 ist eine Befestigungsvorrichtung 30 vorgesehen, die ein erstes Schieberelement bzw. Rahmenelement 20 haltert. Die weiteren Rahmenelemente 21 bis 23 sind in dem ersten Rahmenelement 20 gelagert und an dem letzten Rahmenelement 23 ist der Schieber 12 befestigt.

Der Schieber 12 kann auf eine Länge bis zu der zumindest einen Auslassöffnung 104 verfahren werden, wie in **Fig. 3** und **4** gezeigt ist. Der Schieber 12 hat, um das Schüttgut effektiv aus der Schüttgutlagerbox 100 zu den Auslassöffnungen zu schieben, zu jeder seiner äußeren Seiten einklappbare Seitenelemente 121, die in einem vorzugsweise rechten Winkel oder auch jedem Winkel zwischen 0° und 90° durch einen Hubzylinder 122 pro Seite nach vorne, zur Rückwand 101 hin, eingeklappt werden können.

Die teleskopierbaren Schiebeelemente, hier Plattenelemente 20 bis 23, des Schiebers 12 sind mit einer Vorrichtung 18 zum Halten und Betätigen in **Fig. 3** und **Fig. 4** über Seilzugelemente verbunden. Die Vorrichtung 18 zum Halten und Betätigen ist an einer oberen Kante des Stabilisierungselements 14 angeordnet. Dieser Vorrichtung ist die Befestigungsvorrichtung 30 zugeordnet. Die Befestigungsvorrichtung 30 ist zwischen den vertikalen Traversenelementen 111, 112 des Rahmens 11 positioniert und weist zwei Schenkel auf, die jeweils einen Haltefuß 31 haben, an dem ein Schwenkarm 32 befestigt ist, der schwenkbar an den beiden Längskanten des ersten Rahmenelements 20 des Schiebers 12 verbunden ist. In einem eingefahrenen Zustand, wie in **Fig. 2** oder **Fig. 5** gezeigt, der einem Nichtbenutzungszustand der Schieberanlage entspricht, liegen die teleskopierbaren Rahmenelemente 21 bis 23 an dem ersten Rahmenelement 20 an. Durch den Schwenkarm 32 sind die eingefahrenen Rahmenelemente 20 bis 23 unter dem horizontalen Stabilisierungselement 14 des Rahmens 11 aus der Schüttgutlagerbox 100 herausgeschwenkt angeordnet. In einem ausgefahrenen Zustand schwenkt der Schwenkarm 32 die Rahmenelemente 20 bis 23 aus dem Rahmen 11 heraus in die Schüttgutlagerbox 100 hinein.

Die Befestigungsvorrichtung 30 stellt in Zusammenarbeit mit der Vorrichtung 18 zum Halten und Betätigen auch eine Hebevorrichtung für den Schieber 12 bereit, so dass der Schieber 12 nicht nur entlang der Bodenplatte 103, sondern auch in einer Ebene parallel zur Bodenplatte 103 bzw. in einem Winkel dazu bewegt werden kann. Dazu ist die Vorrichtung 18 zum Halten und Betätigen mit einem Seilzugsystem ausgestattet, wobei ein Seil 181 über ein Rollensystem mit einer motorisierten Seilzugrolle 182 verbunden ist. Das Seil 181 ist ferner bis zu einer Halterung 183, die sich an einem dritten Rahmenelement 22 des Schiebers 12 befindet, vorgespannt. Die Seilzugrolle 182 ist an einem der beiden Schwenkarme 32 seitlich angeordnet und macht zusammen mit der Vorrichtung 18 zum Halten und Betätigen, die eine korrespondierende motorisierte Seilzugrolle umfasst, das Verschwenken der teleskopierbaren Schiebeelemente, hier der Plattenelemente 20 bis 23 möglich.

Diese Ausführungsform der Erfindung basiert darauf (figurativ nicht gezeigt), dass das Seilzugsystem eine reine Hubeinrichtung ist, die die Höhe des Materialabtrags, also eine Höhe einer Schüttgutanhäufung definiert. Es ist möglich, hierdurch im Rückhub den Schieber vom Materialkontakt (Schüttgutkontakt) zu lösen. Die Hubbewegung kann über Seiltrommel, Kettenzug, Hydraulik- oder Elektrozylinder erfolgen.

Die Teleskopierbewegung kann bspw. über beidseitige Zahnstangen und Motore erfolgen, wobei ein Einzelantrieb jeder Teleskopstufe denkbar ist oder auch eine gekoppelte Teleskopierung aller Stufen gleichzeitig.

Der Rahmen 11 kann vor der offenen Seite der Schüttgutlagerbox 100 quer (also parallel zu der Rückwand 101) verfahren werden, wozu die Vorrichtung zum Bewegen von Schüttgut 1000 eine Schiebevorrichtung 40 aufweist. Die Schiebevorrichtung 40 umfasst zwei Schienen 41, 42, die sich auch vor weitere, benachbarte Schüttgutlagerboxen 100 erstrecken. Zwischen den Schienen 41, 42 ist ein entlang der Schienen 41, 42 verschiebbar gelagertes Profilelement 43 angeordnet. Das Profilelement 43 weist Ausnehmungen 44 auf, mit denen die Haltefüße 31 der Befestigungsvorrichtung 30 in Eingriff stehen. Ferner sind die Traversenelemente 111, 112 des Rahmens 11 über ihre Rollen 15 oder zu den Rollen alternative Elemente in oder auf den Schienen 41, 42 gelagert.

Die Schiebevorrichtung 40 kann ferner eine dritte Schiene 45 umfassen. Die Traversenelemente 111 und 112 laufen, wie dargelegt auf den Schienen 41,42. Diese Schienen 41,42 bieten keine seitliche Führung. Das untere, Richtung Schüttgutlagerbox weisende Ende 112', 111' der Traversenelemente 111, 112 wird horizontal durch die Schiene 45 geführt, die mit den Enden Ende 112', 111' der Traversenelemente 111, 112 fest verbunden ist. Diese Schiene 45 verläuft auf der Bodenplatte oder an der Bodenplatte 103 und wird in Taschen der Seitenwände 102 gehalten.

Wird der Rahmen 11 verfahren, so wird folglich die Schiene in die Tasche 106 eingefädelt um beidseitig gehalten zu werden.

Die Anordnung mit der Schiene 45 ist für Ausführungsformen der Erfindung mit Erfassungsvorrichtungen wie bspw. die Kameras 51 geeignet.

Die Schiebevorrichtung 40 weist eine Schienenvorrichtung 401 auf, die dazu dient, den Rahmen 11 gegengelagert sicher verschieben zu können. Dazu ist oberenends an den zwei Seitenwänden 102, 102` der Schüttgutlagerbox 100 diese Schienenvorrichtung 401 vorgesehen, die einen Querholm 402 umfasst. Entlang der Länge dieses Querholms 402 ist ein oberer, bodenferner Abschnitt 17 des Rahmens 11 verschiebbar gelagert. Der obere Abschnitt 17 des Rahmens 11 weist dazu Rollen 16 auf, die den Rahmen 11 zusätzlich gegen den Querholm 402 lagern und so eine Bewegung des Rahmens 11 stabilisieren.

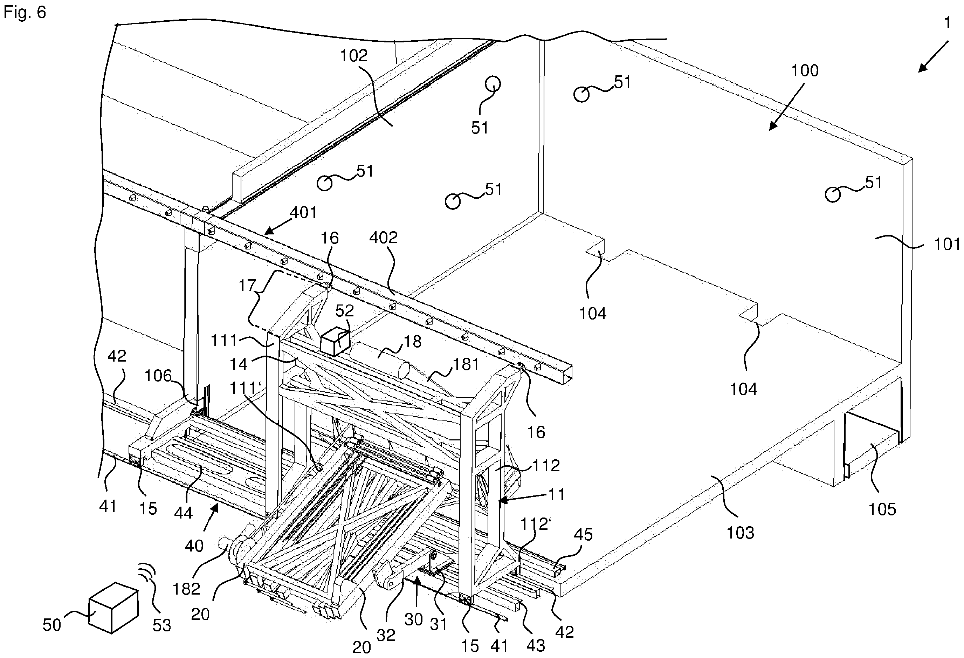

Die Anlage 1 zum Ein- und Auslagern von Schüttgut umfasst ferner eine Erfassungsvorrichtung, mit der die Füllmenge des eingelagerten Schüttguts 1000 erfasst wird, wie in **Fig. 6** gezeigt ist. Dort umfasst die Erfassungsvorrichtung einige Kameras 51 als optische Sensoren, die kontinuierlich Bilder des Inneren der Schüttgutlagerbox 100 aufnehmen. Die Kameras 51 sind an den Seitenwänden 102, 102' und der Rückwand 101 auf verschiedenen Höhen angeordnet. Den Kameras 51 ist eine Datenverarbeitungseinheit 50 zugeordnet, die ferner mit einer Steuerungsvorrichtung 52 elektronisch verbunden ist, um eine automatisierte Ein- und Auslagerung des Schüttguts 1000 zu ermöglichen. Die Datenverarbeitungseinheit 50 kann ein mobiles Endgerät, wie ein Laptop oder Smartphone, oder ein fest angeordnetes Endgerät sein, mit dem eine automatisierte Überwachung des Innenraums der Schüttgutlagerbox 100 ermöglicht ist. Alle Komponenten der Erfassungsvorrichtung sind untereinander zum Datenaustausch, zur Datenverarbeitung und zur Steuerung der Vorrichtung zum Bewegen des Schüttguts elektronisch über geeignete Datenverbindungen, sei es kabelgebunden oder kabellos über ein mobiles Netzwerk, verbunden, in **Fig. 6** durch eine kabellose Verbindung 53 schematisiert.

Alternativ kann die Datenverarbeitungseinheit 50, die bspw. in einem Schaltschrank angeordnet sein kann, in der Nähe der Steuerungsvorrichtung 52 positioniert und so mit einer festen LAN-Verbindung angebunden werden.

Für die Steuerung der Schieberanlage muss an sich nur die Schüttgutoberfläche erfasst werden. Weil mit starken Staubemissionen zu rechnen ist, können vorteilhaft Sensoren zur Abstandsmessung (Ultraschall) in einem oberen Bereich der Seitenwände 102,102` die Kameras 51 sinnvoll ergänzen.

### BEZUGSZEICHENLISTE

- 1: Anlage zum Ein- und Auslagern von Schüttgut
- 11: Rahmen
- 12: Schieber
- 14: Stabilisierungselement
- 15: Rollen
- 16: Rollen
- 17: Oberer Abschnitt Rahmen 11
- 18: Vorrichtung zum Halten und Betätigen
- 20-23: Rahmenelemente des Schiebers 12
- 30: Befestigungsvorrichtung
- 31: Haltefuß
- 32: Schwenkarm
- 40: Schiebevorrichtung
- 41: Schiene
- 42: Schiene
- 43: Profilelement
- 44: Ausnehmung
- 45: Schiene
- 50: Datenverarbeitungseinheit
- 51: Kamera
- 52: Steuerungsvorrichtung
- 53: Kabellose Verbindung
- 101: Rückwand
- 100: Schüttgutlagerbox
- 102,102`: Seitenwand
- 103: Bodenplatte
- 104: Auslassöffnung
- 105: Auslagereinrichtung
- 106: Tasche
- 111: Traversenelement
- 111': Ende Traversenelement
- 112: Traversenelement
- 112': Ende Traversenelement
- 121: Seitenelement
- 122: Hubzylinder
- 181: Seil
- 182: motorisierte Seilzugrolle
- 183: Halterung
- 401: Schienenvorrichtung
- 402: Querholm
- 1000: Schüttgut

## Patentansprüche

1. Anlage (1) zum Ein- und Auslagern von Schüttgut (1000), umfassend
- zumindest eine Schüttgutlagerbox (100), die zwei Seitenwände (102, 102') und eine offene Seite zum Ein- und Auslagern von Schüttgut aufweist, der gegenüber eine Rückwand (101) angeordnet ist, wobei die Seitenwände (102, 102') und die Rückwand (101) auf einer Bodenplatte (103) angeordnet sind, und wobei an einer zwischen der Bodenplatte (103) und der Rückwand (101) vorliegenden Kante zumindest eine Auslassöffnung (104) für Schüttgut (1000) angeordnet ist, unterhalb der eine Auslagereinrichtung (105) vorliegt,
- zumindest eine Vorrichtung zum Bewegen von Schüttgut (1000),
**dadurch gekennzeichnet, dass**
die Anlage (1) zumindest eine
- Erfassungsvorrichtung, die zum Erfassen einer Menge an Schüttgut (1000) in der Schüttgutlagerbox (100) ausgebildet ist, und eine
- Steuerungsvorrichtung aufweist, die mit der zumindest einen Erfassungsvorrichtung und der Vorrichtung zum Bewegen von Schüttgut (1000) gekoppelt ist,
wobei die Vorrichtung zum Bewegen von Schüttgut (1000) steuerbar ist,
und dass
die Vorrichtung zum Bewegen von Schüttgut (1000) eine Schieberanlage aufweist, die an der offenen Seite der Schüttgutlagerbox (100) angeordnet ist und einen Rahmen (11) aufweist, an dem ein Schieber (12) angeordnet ist, der mittels einer Verfahrvorrichtung der Anlage (1) von der offenen Seite der Schüttgutlagerbox (100) zumindest auf eine Länge bis zu der zumindest einen Auslassöffnung (104) verfahrbar ist und der eine Breite aufweist, die zumindest einem Teil oder der ganzen Breite der Rückwand (101) entspricht.

2. Anlage (1) nach Anspruch 1,
**dadurch gekennzeichnet, dass**
- die in der Schüttgutlagerbox (100) angeordnete(n) Erfassungsvorrichtung(en) dazu ausgebildet ist/sind, eine Selbststeuerung und -regelung der Steuerungsvorrichtung der Vorrichtung zum Bewegen von Schüttgut (1000), basierend auf dem Erfassen der Menge an Schüttgut (1000) in der Schüttgutlagerbox (100) durch die dort angeordnete Erfassungsvorrichtung(en) zu bewirken und Schüttgut (1000) in der einen oder mehreren Schüttgutlagerboxen (100) zu bewegen, und/oder
- die in der Schüttgutlagerbox (100) angeordnete(n) Erfassungsvorrichtung(en) mit zumindest einer Datenverarbeitungsvorrichtung eines Bedieners kommuniziert/kommunizieren, die mit der Steuerungsvorrichtung der Vorrichtung zum Bewegen von Schüttgut (1000) zur indirekten Steuerung gekoppelt ist.

3. Anlage (1) nach Anspruch 1 oder 2,
**dadurch gekennzeichnet, dass**
die Erfassungsvorrichtung, die zum Erfassen einer Menge an Schüttgut (1000) in der Schüttgutlagerbox (100) ausgebildet ist, eine oder mehrere Vorrichtung(en) aus der Gruppe ist/sind, die
- Kameras und Sensoren umfasst, die an zumindest einer der Seitenwände (102, 102') und/oder der Rückwand (101) angeordnet oder die an einer Haltevorrichtung an der offenen Seite der Schüttgutlagerbox (100) befestigt ist/sind, und die auf das auf der Bodenplatte (103) einlagerbare Schüttgut (1000) gerichtet ist/sind, und/oder
- Wägevorrichtungen sind, bevorzugt Wägesensoren, die an oder in der Bodenplatte (103) angeordnet sind.

4. Anlage (1) nach zumindest einem der Ansprüche 1 bis 3,
**dadurch gekennzeichnet, dass**
die Auslassöffnung (104), die an der Kante vorliegt, die durch die Rückwand (101) und die Bodenplatte (103) gebildet wird,
eine oder mehrere Durchtrittsöffnungen (104) ist/sind, die einen polygonalen, bevorzugt rechteckigen (104), oder halbrunden Querschnitt aufweisen.

5. Anlage (1) nach zumindest einem der Ansprüche 1 bis 4,
**dadurch gekennzeichnet, dass**
der Schieber (12) der Schieberanlage mittels einer teleskopierbaren Verfahrvorrichtung von der offenen Seite der Schüttgutlagerbox (100) zumindest auf eine Länge bis zu der zumindest einen Auslassöffnung (104) teleskopierbar verfahrbar ist.

6. Anlage (1) nach zumindest einem der Ansprüche 1 bis 5,
**dadurch gekennzeichnet, dass**
die Schieberanlage eine Hebevorrichtung aufweist, die mit dem Rahmen (11) gekoppelt ist und dazu ausgebildet ist, die teleskopierbare Verfahrvorrichtung mit dem Schieber (12) entlang zumindest eines Teils der Höhe des Rahmen (11) zu verfahren.

7. Anlage (1) nach zumindest einem der Ansprüche 1 bis 6,
**dadurch gekennzeichnet, dass**
eine Schiebevorrichtung (40) an oder vor der Bodenplatte (103) an der offenen Seite der Schüttgutlagerbox (100) angeordnet ist, an der der Rahmen (11), an dem der Schieber (12) angeordnet ist, in Bezug zu der Breite der offenen Seite der zumindest einen Schüttgutlagerbox (100) quer verschiebbar ist.

8. Anlage (1) nach zumindest einem der Ansprüche 1 bis 7,
**dadurch gekennzeichnet, dass**
der Rahmen (11) zumindest zwei vertikale Stützelemente (111, 112) aufweist, die an einem oberen, bodenfernen Ende durch zumindest ein horizontales Stabilisierungselement (14) miteinander verbunden sind, und an einem unteren, bodennahen Ende zumindest eine Verfahrvorrichtung aufweisen,
wobei bevorzugt die zumindest zwei vertikalen Stützelemente Traversenelemente (111, 112) oder Plattenelemente sind,
wobei die Verfahrvorrichtung Räder oder Rollen (15) aufweist, und/oder wobei das horizontale Stabilisierungselement (14) eine Traversenkonstruktion oder Plattenelemente aufweist.

9. Anlage (1) nach Anspruch 7 oder 8,
**dadurch gekennzeichnet, dass**
die Schiebevorrichtung (40) eine Schienenvorrichtung (401) zum Verschieben und als Gegenlager (16) für den Rahmen (11) aufweist, die benachbart zu einem oberen Ende des Rahmens, bevorzugt oberenends an den zwei Seitenwänden (102, 102'), der zumindest einen Schüttgutlagerbox (100) vorliegt und die besonders bevorzugt ein Querholm (402) ist, wobei entlang zumindest eines Teils der Länge der Schienenvorrichtung (401) ein oberer, bodenferner Abschnitt (17) des Rahmens (11) verschiebbar ist.

10. Anlage (1) nach zumindest einem der Ansprüche 5 bis 9,
**dadurch gekennzeichnet, dass**
der teleskopierbare Schieber (12) eine Mehrzahl ineinander verfahrbarer und teleskopierbarer Schiebeelemente aufweist, und wobei eine Vorrichtung (18) zum Halten und Betätigen der teleskopierbaren Schiebeelemente an dem horizontalen Stabilisierungselement (14) des Rahmens (12) angeordnet ist, und/oder wobei ein erstes der Mehrzahl der Schiebeelemente an einer Befestigungsvorrichtung (30) angeordnet ist, und wobei ein letztes der Mehrzahl der Schiebeelemente den Schieber (12) haltert.

11. Anlage (1) nach zumindest einem der Ansprüche 5 bis 10,
**dadurch gekennzeichnet, dass**
- die teleskopierbaren Schiebeelemente flache Rahmen- oder Plattenelemente (20,21,22,23) oder Hubzylinder sind, und
- die Vorrichtung (18) zum Halten und Betätigen Hydraulikelemente oder Seilzugelemente aufweist.

12. Anlage (1) nach Anspruch 10 oder 11,
**dadurch gekennzeichnet, dass**
die Befestigungsvorrichtung (30) zwischen den zumindest zwei vertikalen Stützelementen des Rahmens (11) positioniert ist und zwei Schenkel aufweist, die jeweils einen Haltefuß (31) aufweisen, an dem ein Schwenkarm (32) befestigt ist, der schwenkbar seitlich mit den teleskopierbaren Schiebeelementen, bevorzugt mit einer der beiden Längskanten des ersten Rahmen- oder Plattenelements (20) verbunden ist,
wobei in einem eingefahrenen Zustand der teleskopierbaren Schiebeelemente die Mehrzahl der Schiebeelemente (20,21,22,23) an oder in dem ersten der Schiebeelemente (20) zur Anlage kommt, und wobei in einem eingefahrenen Nichtbenutzungszustand die Schiebeelemente (20,21,22,23) von einer Position innerhalb der Schüttgutlagerbox (100) durch den Schwenkarm (32) unter dem horizontalen Stabilisierungselement (14) des Rahmens (11) aus der Schüttgutlagerbox (100) heraus in eine Position außerhalb der Schüttgutlagerbox (100) schwenkbar angeordnet sind, wobei der Schieber (12) in die Schüttgutlagerbox (100) hinein weisend angeordnet ist, wobei bevorzugt die Befestigungsvorrichtung (30) auch die Hebevorrichtung bereitstellt.

13. Anlage (1) nach zumindest einem der Ansprüche 7 bis 12,
**dadurch gekennzeichnet, dass**
die Schiebevorrichtung (40) zumindest zwei Schienen (41, 42) aufweist, die an oder vor der Bodenplatte (103) entlang der Breite der zumindest einen oder entlang der mehreren Schüttgutlagerboxen (100) angeordnet sind, und an denen der Rahmen (11), an dem der Schieber (12) angeordnet ist, a verschiebbar ist, und wobei bevorzugt zwischen den zumindest zwei Schienen (41, 42) entlang deren Länge zumindest ein entlang der Schienen (41, 42) verschiebbar befestigtes Profilelement (43) angeordnet ist, das Ausnehmungen (44) aufweist, mit denen die Haltefüße (31) der Befestigungsvorrichtung in Eingriff stehen.

14. Verfahren zum Ein- und Auslagern von Schüttgut (1000) in einer Anlage (1) nach zumindest einem der Ansprüche 1 bis 13,
**umfassend die Schritte**
- Bereitstellen der Schüttgutlagerbox (100), die zwei Seitenwände (102, 102') und eine offene Seite zum Ein- und Auslagern von Schüttgut aufweist, der gegenüber die Rückwand (101) angeordnet ist, wobei die Seitenwände (102, 102') und die Rückwand (101) auf der Bodenplatte (103) angeordnet sind, und wobei an der zwischen der Bodenplatte (103) und der Rückwand (101) vorliegenden Kante zumindest eine Auslassöffnung für Schüttgut (1000) angeordnet ist, unterhalb der eine Auslagereinrichtung für Schüttgut vorliegt, und Bereitstellen der Vorrichtung zum Bewegen von Schüttgut (1000),
- in Gang setzen der Erfassungsvorrichtung, die zum Erfassen einer Menge an Schüttgut (1000) in der Schüttgutlagerbox (100) ausgebildet ist, dabei Erfassen von Datenwerten, die eine in der Schüttgutlagerbox vorliegende Menge an Schüttgut abbildet,
- Übertragen der Datenwerte der erfassten Menge an Schüttgut (1000) in der Schüttgutlagerbox (100) an die Steuerungsvorrichtung, die mit der Erfassungsvorrichtung und der Vorrichtung zum Bewegen von Schüttgut (1000) gekoppelt ist, und
- Steuern der Vorrichtung zum Bewegen von Schüttgut (1000) in Abhängigkeit der Daten der erfassten Menge an Schüttgut (1000), hierdurch in Gang setzen/bewegen der Vorrichtung zum Bewegen von Schüttgut (1000) und hierdurch Ein- und Auslagern von Schüttgut (1000).

15. Verfahren nach Anspruch 14,
**dadurch gekennzeichnet, dass**
- das in Gang setzen der Erfassungsvorrichtung, die zum Erfassen einer Menge an Schüttgut (1000) in der Schüttgutlagerbox (100) ausgebildet ist, und das
- Übertragen der Datenwerte der erfassten Menge an Schüttgut (1000) in der Schüttgutlagerbox (100) an die Steuerungsvorrichtung, die mit der Erfassungsvorrichtung und der Vorrichtung zum Bewegen von Schüttgut (1000) gekoppelt ist, und das
- Steuern der Vorrichtung zum Bewegen von Schüttgut (1000) durch eine Selbststeuerung und -regelung der Steuerungsvorrichtung der Vorrichtung zum Bewegen von Schüttgut (1000), basierend auf dem Erfassen der Menge an Schüttgut (1000) in der Schüttgutlagerbox (100) durch die dort angeordnete(n) Erfassungsvorrichtung(en) erfolgt.

16. Verfahren nach Anspruch 14,
**dadurch gekennzeichnet, dass**
- das Bewegen des Schüttguts (1000) in der einen oder mehreren Schüttgutlagerbox(en) (100) durch das in Gang setzen der Erfassungsvorrichtung, die zum Erfassen einer Menge an Schüttgut (1000) in der Schüttgutlagerbox (100) ausgebildet ist, und das
- Übertragen der Daten der erfassten Menge an Schüttgut (1000) in der Schüttgutlagerbox (100) an die Steuerungsvorrichtung, die mit der Erfassungsvorrichtung und der Vorrichtung zum Bewegen von Schüttgut (1000) gekoppelt ist, und das
- Steuern der Vorrichtung zum Bewegen von Schüttgut (1000) erfolgt, indem die durch die in der zumindest einen Schüttgutlagerbox (100) angeordnete(n) Erfassungsvorrichtung(en) mit zumindest einer Datenverarbeitungsvorrichtung eines Bedieners kommuniziert/kommunizieren, die mit der Steuerungsvorrichtung der Vorrichtung zum Bewegen von Schüttgut (1000) zur indirekten Steuerung gekoppelt ist.

## Claims

1. An installation (1) for storing and removing bulk material (1000),
comprising
- at least one bulk material storage box (100), which has two side walls (102, 102') and an open side for storing and removing bulk material, which is arranged opposite a rear wall (101), wherein the side walls (102, 102') and the rear wall (101) are arranged on a base plate (103), and wherein at least one outlet opening (104) for bulk material (1000), below which a removing means (105) is present, is arranged at an edge, which is present between the base plate (103) and the rear wall (101),
- at least one device for moving bulk material (1000),
**characterized in that**
the installation (1) has at least one
- detecting device, which is formed for detecting a quantity of bulk material (1000) in the bulk material storage box (100), and a
- control device, which is coupled to the at least one detecting device and the device for moving bulk material (1000),
wherein the device for moving bulk material (1000) can be controlled,
and that
the device for moving bulk material (1000) has a slider installation, which is arranged on the open side of the bulk material storage box (100) and has a frame (11), on which a slider (12) is arranged, which can be displaced by means of a displacing device of the installation (1) from the open side of the bulk material storage box (100) at least to a length of up to the at least one outlet opening (104) and which has a width, which corresponds to at least a portion or the entire width of the rear wall (101).

2. The installation (1) according to claim 1,
**characterized in that**
- the detecting device(s) arranged in the bulk material storage box (100) is/are formed to effect a self-control and regulation of the control device of the device for moving bulk material (1000), based on the detection of the quantity of bulk material (1000) in the bulk material storage box (100) by means of the detecting device(s) arranged there and to move bulk material (1000) in the one or several bulk material storage boxes (100),
and/or
- the detecting device(s) arranged in the bulk material storage box (100) communicates/communicate with at least one data processing device of an operator, which is coupled to the control device of the device for moving bulk material (1000) for the indirect control.

3. The installation (1) according to claim 1 or 2,
**characterized in that**
the detecting device, which is formed for detecting a quantity of bulk material (1000) in the bulk material storage box (100), is/are one or several device(s) from the group, which
- comprises cameras and sensors, which is/are arranged on at least one of the side walls (102, 102') and/or of the rear wall (101) or which is/are fastened to a holding device on the open side of the bulk material storage box (100), and which is/are directed at the bulk material (1000), which can be stored on the base plate (103), and/or
- are weighing devices, preferably weighing sensors, which are arranged on or in the base plate (103).

4. The installation (1) according to at least any one of claims 1 to 3,
**characterized in that**
the outlet opening (104), which is present on the edge, which is formed by the rear wall (101) and the base plate (103),
is/are one or several passage openings (104), which have a polygonal, preferably rectangular (104), or semi-circular cross section.

5. The installation (1) according to at least any one of claims 1 to 4,
**characterized in that**
the slider (12) of the slider installation can be displaced in a telescopic manner by means of a telescopic displacement device from the open side of the bulk material storage box (100) at least to a length of up to the at least one outlet opening (104).

6. The installation (1) according to at least any one of claims 1 to 5,
**characterized in that**
the slider installation has a lifting device, which is coupled to the frame (11) and which is formed to displace the telescopic displacement device by means of the slider (12) along at least a portion of the height of the frame (11).

7. The installation (1) according to at least any one of claims 1 to 6,
**characterized in that**
a sliding device (40) is arranged on or in front of the base plate (103) on the open side of the bulk material storage box (100), on which the frame (11), on which the slider (12) is arranged, can be shifted transversely with respect to the width of the open side of the at least one bulk material storage box (100).

8. The installation (1) according to at least any one of claims 1 to 7,
**characterized in that**
the frame (11) has at least two vertical support elements (111, 112), which are connected to one another by means of at least one horizontal stabilizing element (14) on an upper end spaced apart from the ground, and have at least one displacement device on a lower end close to the ground,
wherein the at least two vertical support elements are preferably truss elements (111, 112) or plate elements,
wherein the displacement device has wheels or rollers (15), and/or wherein the horizontal stabilizing element (14) has a truss construction or plate elements.

9. The installation (1) according to claim 7 or 8,
**characterized in that**
the sliding device (40) is a rail device (401) for shifting and as counter bearing (16) for the frame (11), which is present adjacent to an upper end of the frame, preferably on the upper end on the two side walls (102, 102'), of the at least one bulk material storage box (100) and which is particularly preferably a cross beam (402), wherein an upper section (17) of the frame (11) spaced apart from the ground can be shifted along at least a portion of the length of the rail device (401).

10. The installation (1) according to at least any one of claims 5 to 9,
**characterized in that**
the telescopic slider (12) has a plurality of telescopic sliding elements, which can be displaced one inside the other, and wherein a device (18) for holding and actuating the telescopic sliding elements is arranged on the horizontal stabilizing element (14) of the frame (12), and/or
wherein a first one of the plurality of the sliding elements is arranged on a fastening device (30), and wherein a last one of the plurality of the sliding elements holds the slider (12).

11. The installation (1) according to at least any one of claims 5 to 10,
**characterized in that**
- the telescopic sliding elements are flat frame or plate elements (20, 21, 22, 23) or lifting cylinders, and
- the device (18) for holding and actuating has hydraulic elements or wire rope hoist elements.

12. The installation (1) according to claim 10 or 11,
**characterized in that**
the fastening device (30) is positioned between the at least two vertical support elements of the frame (11) and has two legs, which each have a holding foot (31), to which a pivot arm (32) is fastened, which is pivotably laterally connected to the telescopic sliding elements, preferably to one of the two longitudinal edges of the first frame or plate elements (20),
wherein, in a retracted state of the telescopic sliding elements, the plurality of the sliding elements (20, 21, 22, 23) comes to rest on or in the first one of the sliding elements (20), and wherein, in a retracted non-use state, the sliding elements (20, 21, 22, 23) are pivotably arranged from a position within the bulk material storage box (100) by means of the pivot arm (32) below the horizontal stabilizing element (14) of the frame (11) out of the bulk material storage box (100) into a position outside of the bulk material storage box (100), wherein the slider (12) is arranged so as to point into the bulk material storage box (100), wherein the fastening device (30) preferably also provides the lifting device.

13. The installation (1) according to at least any one of claims 7 to 12,
**characterized in that**
the sliding device (40) has at least two rails (41, 42), which are arranged on or in front of the base plate (103) along the width of the at least one or along the several bulk material storage boxes (100), and on which the frame (11), on which the slider (12) is arranged, a can be shifted, and wherein preferably between the at least two rails (41, 42), along the length of which at least one profile element (43) is arranged, which is fastened in a shiftable manner along the rails (41, 42) and which has recesses (44), with which the holding feet (31) of the fastening device engage.

14. A method for storing and removing bulk material (1000) in an installation (1) according to at least any one of claims 1 to 13,
**comprising the steps of**
- providing the bulk material storage box (100), which has two side walls (102, 102') and an open side for storing and removing bulk material, which is arranged opposite the rear wall (101), wherein the side walls (102, 102') and the rear wall (101) are arranged on the base plate (103), and wherein at least one outlet opening for bulk material (1000), below which a removing means for bulk material is present, is arranged on the edge, which is present between the base plate (103) and the rear wall (101), below which outlet opening a removal means for bulk material is present, and providing the device for moving bulk material (1000),
- starting up the detecting device, which is formed for detecting a quantity of bulk material (1000) in the bulk material storage box (100), thereby detecting data values, which reflects a quantity of bulk material present in the bulk material storage box,
- transferring the data values of the detected quantity of bulk material (1000) in the bulk material storage box (100) to the control device, which is coupled to the detecting device and the device for moving bulk material (1000), and
- controlling the device for moving bulk material (1000) as a function of the data of the detected quantity of bulk material (1000), thereby starting up/moving the device for moving bulk material (1000) and thereby storing and removing bulk material (1000).

15. The method according to claim 14,
**characterized in that**
- the start-up of the detecting device, which is formed for detecting a quantity of bulk material (1000) in the bulk material storage box (100), and the
- transfer of the data values of the detected quantity of bulk material (1000) in the bulk material storage box (100) to the control device, which is coupled to the detecting device and the device for moving bulk material (1000), and the- control of the device for moving bulk material (1000)
takes place by means of a self-control and regulation of the control device of the device for moving bulk material (1000), based on the detection of the quantity of bulk material (1000) in the bulk material storage box (100) by means of the detecting device(s) arranged there.

16. The method according to claim 14,
**characterized in that**
- the movement of the bulk material (1000) in the one or several bulk material storage box(es) (100) is formed by the start-up of the detecting device, which is formed for detecting a quantity of bulk material (1000) in the bulk material storage box (100), and the
- transfer of the data of the detected quantity of bulk material (1000) in the bulk material storage box (100) to the control device, which is coupled to the detecting device and the device for moving bulk material (1000), and the
- control of the device for moving bulk material (1000) takes place **in that** the by means of the detecting device(s) arranged in the at least one bulk material storage box (100) communicates/communicate with at least one data processing device of an operator, which is coupled to the control device of the device for moving bulk material (1000) for the indirect control.

## Revendications

1. Installation (1) pour le stockage et le déstockage de produits en vrac (1000), comprenant
- au moins une caisse de stockage de produits en vrac (100), laquelle présente deux parois latérales (102, 102') et un côté ouvert pour le stockage et le déstockage de produits en vrac, en face duquel est disposée une paroi arrière (101), les parois latérales (102, 102') et la paroi arrière (101) étant disposées sur une plaque de fond (103), et au moins une ouverture de sortie (104) pour produits en vrac (1000) étant disposée sur un bord se trouvant entre la plaque de fond (103) et la paroi arrière (101) et en dessous de laquelle se trouve un dispositif de déstockage (105),
- au moins un dispositif pour le déplacement de produits en vrac (1000), **caractérisée en ce que**
l'installation (1) comprend au moins un
- dispositif de détection qui est conçu pour détecter une quantité de produits en vrac (1000) dans la caisse de stockage de produits en vrac (100), et un
- dispositif de commande qui est relié à l'au moins un dispositif de détection et au dispositif de déplacement de produits en vrac (1000), le dispositif de déplacement de produits en vrac (1000) pouvant être commandé,
et **en ce que**
le dispositif de déplacement de produits en vrac (1000) présente un système coulissant qui est disposé sur le côté ouvert de la caisse de stockage de produits en vrac (100) et qui comprend un cadre (11) sur lequel est disposé un coulisseau (12) qui peut être déplacé du côté ouvert de la caisse de stockage de produits en vrac (100) au moins sur une longueur jusqu'à l'au moins une ouverture de sortie (104) au moyen d'un dispositif de déplacement l'installation (1) et qui présente une largeur correspondant au moins à une partie ou à toute la largeur de la paroi arrière (101).

2. Installation (1) selon la revendication 1,
**caractérisée en ce que**
- le(s) dispositif(s) de détection disposé(s) dans la caisse de stockage de produits en vrac (100) est/sont conçu(s) pour effectuer une commande et une régulation automatiques du dispositif de commande du dispositif de déplacement de produits en vrac (1000), sur la base de la détection de la quantité de produits en vrac (1000) dans la caisse de stockage de produits en vrac (100) par le(s) dispositif(s) de détection qui y est/sont disposé(s), et pour déplacer des produits en vrac (1000) dans une ou plusieurs caisses de stockage de produits en vrac (100), et/ou
- le(s) dispositif(s) de détection disposé(s) dans la caisse de stockage de produits en vrac (100) communique(nt) avec au moins un dispositif de traitement de données d'un opérateur, lequel est relié au dispositif de commande du dispositif de déplacement de produits en vrac (1000) pour une commande indirecte.

3. Installation (1) selon la revendication 1 ou 2,
**caractérisée en ce que**
le dispositif de détection qui est conçu pour détecter une quantité de produits en vrac (1000) dans la caisse de stockage de produits en vrac (100), est un ou plusieurs dispositif(s) du groupe qui sont
- des caméras et des capteurs, lesquel/lesquels est/sont disposé(s) sur au moins l'une des parois latérales (102, 102') et/ou la paroi arrière (101) ou fixé(s) à un dispositif de maintien sur le côté ouvert de la caisse de stockage de produits en vrac (100), et lequel/lesquels est/sont dirigé(s) vers le produit en vrac (1000) pouvant être stocké sur la plaque de fond (103), et/ou
- des dispositifs de pesage, de préférence des capteurs de pesage, qui sont disposés sur ou dans la plaque de fond (103).

4. Installation (1) selon au moins l'une des revendications 1 à 3, **caractérisée en ce que**
l'ouverture de sortie (104) qui est présente sur le bord formé par la paroi arrière (101) et la plaque de fond (103),
est/sont une ou plusieurs ouvertures de passage (104) qui présentent une section transversale polygonale, de préférence rectangulaire (104), ou semi-circulaire.

5. Installation (1) selon au moins l'une des revendications 1 à 4, **caractérisée en ce que**
le coulisseau (12) du système coulissant peut être déplacé de manière télescopique depuis le côté ouvert de la caisse de stockage de produits en vrac (100) au moins sur une longueur jusqu'à l'au moins une ouverture de sortie (104) au moyen d'un dispositif de déplacement télescopique.

6. Installation (1) selon au moins l'une des revendications 1 à 5, **caractérisée en ce que**
le système coulissant comprend un dispositif de levage qui est relié au cadre (11) et qui est conçu pour déplacer le dispositif de déplacement télescopique avec le coulisseau (12) le long d'au moins une partie de la hauteur du cadre (11).

7. Installation (1) selon au moins l'une des revendications 1 à 6, **caractérisée en ce que**
un système coulissant (40) est disposé sur ou devant la plaque de fond (103) sur le côté ouvert de la caisse de stockage de produits en vrac (100), sur lequel le cadre (11), sur lequel est disposé le coulisseau (12), peut coulisser transversalement par rapport à la largeur du côté ouvert de la au moins une caisse de stockage de produits en vrac (100).

8. Installation (1) selon au moins l'une des revendications 1 à 7, **caractérisée en ce que**
le cadre (11) présente au moins deux éléments de support verticaux (111, 112) qui sont reliés entre eux à une extrémité supérieure éloignée du sol par au moins un élément de stabilisation horizontal (14), et qui présentent à une extrémité inférieure proche du sol au moins un dispositif de déplacement, les au moins deux éléments de support verticaux étant de préférence des éléments de traverse (111, 112) ou des éléments de plaque,
le dispositif de déplacement présentant des roues ou des rouleaux (15), et/ou l'élément de stabilisation horizontal (14) présentant une structure de traverse ou des éléments de plaque.

9. Installation (1) selon la revendication 7 ou 8,
**caractérisée en ce que**
le dispositif coulissant (40) présente un dispositif de rail (401) pour le déplacement et comme contre-palier (16) pour le cadre (11), lequel se trouve à proximité d'une extrémité supérieure du cadre, de préférence à l'extrémité supérieure des deux parois latérales (102, 102'), de l'au moins une caisse de stockage de produits en vrac (100) et lequel est plus préférablement une traverse (402), une section (17) supérieure du cadre (11), éloignée du sol, pouvant coulisser le long d'au moins une partie de la longueur du dispositif de rail (401).

10. Installation (1) selon au moins l'une des revendications 5 à 9, **caractérisée en ce que**
le coulisseau télescopique (12) comprend une pluralité d'éléments coulissants télescopiques et pouvant être déplacés les uns dans les autres, et un dispositif (18) pour maintenir et actionner les éléments coulissants télescopiques étant disposé sur l'élément de stabilisation horizontal (14) du cadre (12), et/ou un premier élément de la pluralité d'éléments coulissants étant disposé sur un dispositif de fixation (30), et un dernier élément de la pluralité d'éléments coulissants supportant le coulisseau (12).

11. Installation (1) selon au moins l'une des revendications 5 à 10, **caractérisée en ce que**
- les éléments coulissants télescopiques sont des éléments de cadre ou de plaque plats (20, 21, 22, 23) ou des vérins de levage, et
- le dispositif (18) de maintien et d'actionnement comporte des éléments hydrauliques ou des éléments de traction de câble.

12. Installation (1) selon la revendication 10 ou 11,
**caractérisée en ce que**
le dispositif de fixation (30) est positionné entre les au moins deux éléments de support verticaux du cadre (11) et comprend deux côtés qui présentent chacun un pied de support (31) sur lequel est fixé un bras pivotant (32) qui est relié latéralement de manière pivotante aux éléments coulissants télescopiques, de préférence avec l'un des deux bords longitudinaux du premier élément de cadre ou de plaque (20),
dans laquelle, dans un état rétracté des éléments coulissants télescopiques, la pluralité d'éléments coulissants (20, 21, 22, 23) vient en appui contre ou dans le premier des éléments coulissants (20), et dans laquelle, dans un état rétracté de non-utilisation, les éléments coulissants (20, 21, 22, 23) sont disposés de manière à pouvoir pivoter d'une position à l'intérieur de la caisse de stockage de produits en vrac (100) par le bras pivotant (32) sous l'élément de stabilisation horizontal (14) du cadre (11) hors de la caisse de stockage de produits en vrac (100) dans une position à l'extérieur de la caisse de stockage de produits en vrac (100), le coulisseau (12) étant disposé en étant dirigé vers l'intérieur de la caisse de stockage de produits en vrac (100), le dispositif de fixation (30) mettant de préférence à disposition également le dispositif de levage.

13. Installation (1) selon au moins l'une des revendications 7 à 12, **caractérisée en ce que**
le dispositif coulissant (40) présente au moins deux rails (41, 42) qui sont disposés sur ou devant la plaque de fond (103) le long de la largeur d'au moins un ou le long des plusieurs caisses de stockage de produits en vrac (100), et sur lesquels le cadre (11), sur lequel est disposé le coulisseau (12), peut coulisser, et au moins un élément profilé (43) fixé de manière à pouvoir coulisser le long des rails (41, 42), lequel présente des évidements (44) avec lesquels les pieds de support (31) du dispositif de fixation sont en prise, étant disposé de préférence entre les au moins deux rails (41, 42) le long de leur longueur.

14. Procédé de stockage et de déstockage de produits en vrac (1000) dans une installation (1) selon au moins l'une des revendications 1 à 13, **comprenant les étapes suivantes**
- mise à disposition de la caisse de stockage de produits en vrac (100), laquelle présente deux parois latérales (102, 102') et un côté ouvert pour le stockage et le déstockage de produits en vrac, en face duquel est disposée la paroi arrière (101), les parois latérales (102, 102') et la paroi arrière (101) étant disposées sur la plaque de fond (103), et au moins une ouverture de sortie pour produits en vrac (1000) étant disposée sur le bord se trouvant entre la plaque de fond (103) et la paroi arrière (101) et en dessous de laquelle se trouve un dispositif de déstockage pour produits en vrac, et mise à disposition du dispositif de déplacement de produits en vrac (1000),
- mise en marche du dispositif de détection qui est conçu pour détecter une quantité de produits en vrac (1000) dans la boîte de stockage de produits en vrac (100), en détectant des valeurs de données qui représentent une quantité de produits en vrac présente dans la caisse de stockage de produits en vrac,
- transmission des valeurs de données de la quantité détectée de produits en vrac (1000) dans la caisse de stockage de produits en vrac (100) au dispositif de commande qui est relié au dispositif de détection et au dispositif de déplacement de produits en vrac (1000) et
- commande du dispositif de déplacement de produits en vrac (1000) en fonction des données de la quantité détectée de produits en vrac (1000), ainsi mise en marche/déplacement du dispositif de déplacement de produits en vrac (1000), et ainsi stockage et déstockage de produits en vrac (1000).

15. Procédé selon la revendication 14,
**caractérisé en ce que**
- la mise en marche du dispositif de détection qui est conçu pour détecter une quantité de produits en vrac (1000) dans la caisse de stockage de produits en vrac (100), et la
- transmission des données de la quantité détectée de produits en vrac (1000) dans la caisse de stockage de produits en vrac (100) au dispositif de commande qui est relié au dispositif de détection et au dispositif de déplacement de produits en vrac (1000), et la
- commande du dispositif de déplacement de produits en vrac (1000) s'opèrent par une commande et une régulation automatiques du dispositif de commande du dispositif de déplacement de produits en vrac (1000), sur la base de la détection de la quantité de produits en vrac (1000) dans la caisse de produits en vrac (100) par le(s) dispositif(s) de détection qui y sont disposés.

16. Procédé selon la revendication 14,
**caractérisé en ce que**
- le déplacement des produits en vrac (1000) dans la ou les caisses de stockage de produits en vrac (100) par la mise en marche du dispositif de détection qui est conçu pour détecter une quantité de produits en vrac (1000) dans la caisse de stockage de produits en vrac (100), et la
- transmission des données de la quantité détectée de produits en vrac (1000) dans la caisse de stockage de produits en vrac (100) au dispositif de commande relié au dispositif de détection et au dispositif de déplacement des produits en vrac (1000), et la
- commande du dispositif de déplacement de produits en vrac (1000) s'effectuent en faisant communiquer le(s) dispositif(s) de détection disposé(s) dans la au moins une caisse de stockage de produits en vrac (100) avec au moins un dispositif de traitement de données d'un opérateur, lequel est relié au dispositif de commande du dispositif de déplacement de produits en vrac (1000) pour une commande indirecte.
